# EUROPEAN PATENT APPLICATION

(11) **EP 1 014 291 A2**
(43) Date of publication of application: **28.06.2000**
(21) Application number: 99403217.5
(22) Date of filing: 20.12.1999
(51) Int. Cl.: G06K 7/08

(54) **Reader/writer for IC card**

(30) Priority: 22.12.1998 JP 36564898
(71) Applicant: Lsi Card Corporation, Osaka 556-0005 (JP)
(72) Inventor: Ohki, Sinji, c/o LSI Card Corporation, Osaka-shi, Osaka 556-0005 (JP)
(74) Representative: Bertrand, Didier

(57) **Abstract**

There is provided a reader/writer for an IC card, which makes a decision whether an IC card is usable or unusable on the basis of a level of data written in the IC card, and performs data read/write operations on the IC card in a non-contact state. The reader/writer reads out a data from the IC card, and then, judges whether or not a level (numerical value) of the readout data is within a predetermined range, and further, carries the IC card by its own weight so that a user can not use the IC card, in the case where the level of the readout data is within the predetermined range.

## Description

### BACKGROUND OF THE INVENTION

The present invention relates to a reader/writer which performs data read/write operations on an IC card in a non-contact state.

An IC card has been widely used as a data collection medium or backup memory. For the purpose of preventing a readout failure generated due to a contact fault with a card reader or a pickup of static electricity, a non-contact type IC card, which performs data read/write operations in a non-contact state, has been frequently used.

Such a non-contact type IC card has a structure of enclosing a control circuit, a memory, a sheet coil for power and clock, a sheet coil for write, a sheet coil for read, a sheet coil for write/read switching and the like, in a plastic card. When the non-contact type IC card is loaded into a reader/writer, data write/read operations are carried out between the IC card and the reader/writer. On the other hand, the reader/writer is provided with a plurality of coils corresponding to the sheet coils included in the IC card. These plurality of coils have a function of carrying out data transmission/reception and a power supply with respect to the IC card by magnetic coupling in a non-contact state. The non-contact type IC card has the following effects as compared with a contact type IC card; more specifically, a physical strength is higher, no contact fault is generated and no influence of static electricity is received.

The non-contact type IC card as described above is used as a pachinko (pinball game) ball lending memory. A player previously buys an IC card in which a data of number of balls equivalent to a predetermined amount of money is previously written, and then, loads the IC card into a reader/writer located on a side of a pachinko (pinball game) machine so as to obtain a desired number of balls. In this case, the reader/writer reads out a data of number of remaining balls written in the IC card, and then, judges whether or not the number of balls desired by the player is within the number of remaining balls. In the case where the number of balls desired by the player is within the number of remaining balls, the reader/writer outputs an OK signal to a ball lending machine so as to supply balls to the player while returning the IC card to the player after writing a data of number of remaining balls subtracting the number of balls desired by the player into the IC card. On the other hand, in the case where the number of balls desired by the player exceeds the number of remaining balls, the reader/writer carries out no operation on the IC card, and then, returns it to the player.

In such a card system for pachinko (pinball game) ball lending, the IC card has been returned to the player even in the case where it has a data in which the number of remaining ball is zero. For this reason, there is a high possibility of increasing an unfair practice of unfairly altering a data of the unusable IC card and forging it into a newly usable IC card. In order to previously prevent the aforesaid unfair practice, the following technical concept is made; that is, an IC card having a data of the number of remaining ball already becoming zero is not returned to the player, and is taken in the reader/writer by means of a proper carrying system. However, there is a problem that an extra cost is spent for a driving power of the carrying system.

### BRIEF SUMMARY OF THE INVENTION

It is, therefore, a principal object of the present invention to provide a reader/writer for an IC card, which is constructed so as to take an unusable IC card in its interior by the unusable IC card's own weight, and thereby, can dispense a driving power of a carrying system for taking in the unusable IC card, and thus, can readily and simply take the unusable IC card in its interior and achieve a prevention of the aforesaid unfair practice.

To achieve the above object, according to the first aspect, the present invention provides a reader/writer for an IC card, which makes a decision whether an IC card is usable or unusable on the basis of a level of data written in the IC card, and performs data read/write operations on the IC card in a non-contact state, comprising: a readout section for reading out the data from the IC card; a judging section for judging whether or not a level of the readout data is within a predetermined range; and a card carrying mechanism for carrying the IC card by its own weight in the case where the level of the readout data is within the predetermined range.

According to the second aspect, the present invention provides the reader/writer according to the first aspect, wherein the data written in the IC card is a data showing a numerical value, and the judging section judges whether or not the numerical value of the readout data is equal or less than a predetermined value, and further, in the case where the numerical value is equal or less than the predetermined value, the card carrying mechanism carries the IC card by its own weight,

According to the third aspect, the present invention provides a reader/writer for an IC card, which makes a decision whether an IC card is usable or unusable on the basis of the result whether or not a predetermined collating data is written in the IC card, and performs data read/write operations on the IC card in a non-contact state, comprising: a readout section for reading out a data written in the IC card; a judging section for judging whether or not the collating data is read out by the readout section; and a card carrying mechanism for carrying the IC card by its own weight in the case where the collating data is not read out.

In the case where the level of data written in the IC card loaded in the reader/writer is within a predetermined range, for example, in the case where a written numerical data is equal or less than a predetermined value, the reader/writer makes a decision that the IC card is unusable, and then, the IC card is carried by its own weight, and thus, is taken in the interior. Moreover, in the case where a predetermined collating data is not read out from the IC card loaded in the reader/writer, the reader/writer makes a decision that the IC card is unusable, and then, the IC card is carried by its own weight, and thus, is taken in the interior. Thus, the IC card becoming unusable is not returned to the user; therefore, it is possible to previously prevent IC card forgery such as data alteration by the user. Further, the IC card is carried by its own weight; as a result, there is no specific driving power of the carrying system for taking in the IC card. Whereby it is possible to take in the unusable IC card at a low cost.

According to the fourth aspect, the present invention provides the reader/writer according to any one of first to third aspects, wherein the readout section has a coil which is magnetically coupled with a sheet coil of the IC card, and reads out a data from the IC card by magnetic coupling of the sheet coil of the IC card and the coil. The data is read out from the IC card by magnetic coupling of the coil of the reader/writer and the sheet coil of the IC card; therefore, the read operation can be correctly carried out in a non-contact state.

According to the fifth aspect, the present invention provides the reader/writer according to any one of first to fourth aspects, wherein the card carrying mechanism includes an electromagnetic driving unit for controlling support/non-support of the IC card. A support/non-support of the IC card is controlled in accordance with an on/off operation of the electromagnetic driving unit. For example, in the normal oase, the electromagnetic driving unit is turned off so as to support the loaded IC card, and then, in the case where the reader/writer makes a decision that the IC card is unusable, the electromagnetic driving unit is turned on so as not to support the loaded IC card. By doing so, the unusable IC card, which is not supported, is carried by its own weight. Therefore, it is possible to take in the unusable IC card by an extremely simple construction.

The above and further objects and features of the invention will more fully be apparent from the following detailed description with accompanying drawings.

### BRIEF DESCRIPTION OF THE SEVERAL VIEWS OF THE DRAWINGS

FIG. 1 is a block diagram schematically showing a construction of an IC card;
FIG. 2 is a block diagram schematically showing a construction of a reader/writer;
FIG. 3 is a view schematically showing a pachinko (pinball game) ball lending machine;
FIG. 4 is a front view schematically showing a positional relationship between the IC card and the reader/writer;
FIG. 5 is a side view schematically showing a positional relationship between the IC card and the reader/writer;
FIG. 6A and FIG. 6B are views showing a card taking-in member (electromagnetic solenoid); and
FIG. 7 is a flowchart showing a procedure of a ball lending operation.

### DETAILED DESCRIPTION OF THE INVENTION

The present invention will be described in detail with reference to the accompanying drawings showing an embodiment. The following is a description on an IC card and a reader/writer which are used in the case of lending pachinko (pinball game) balls.

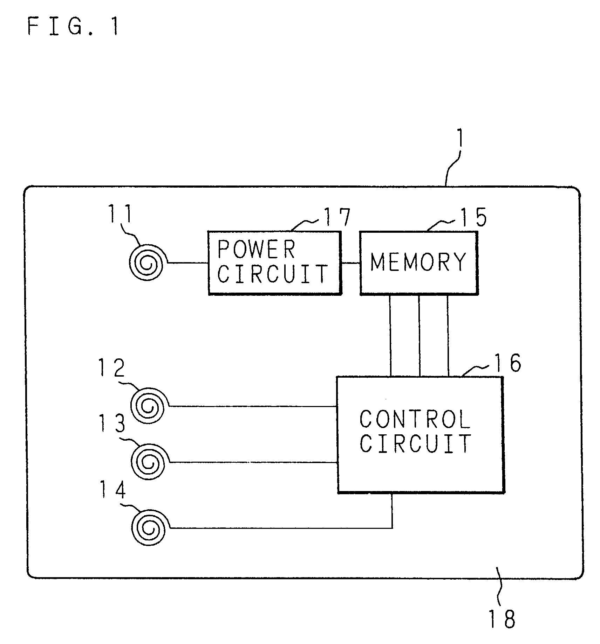

FIG. 1 is a block diagram schematically showing a construction of an IC card. An IC card 1 has a structure of enclosing a sheet coil 11 for power and clock, a sheet coil 12 for write, a sheet coil 13 for read, a sheet coil 14 for write/read switching, a memory 15, a control circuit 16, a power circuit 17 and the like, in a plastic card 18.

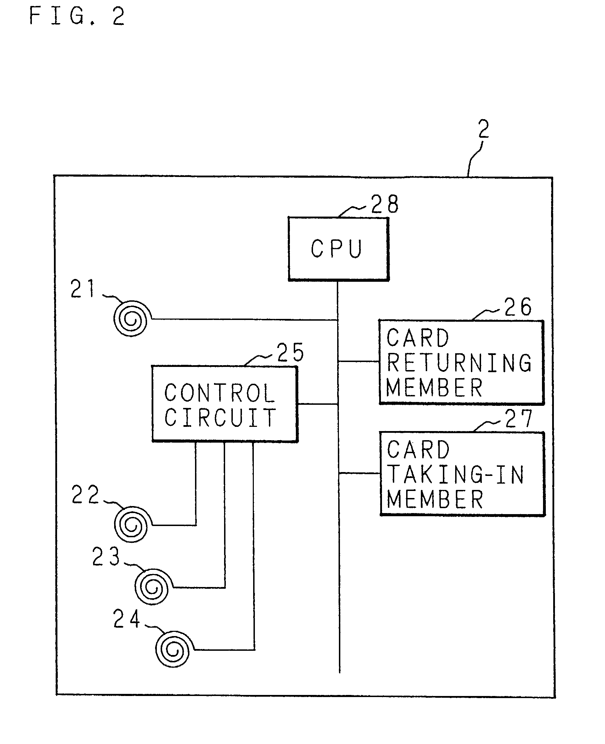

Moreover, FIG. 2 is a block diagram schematically showing a construction of a reader/writer. A reader/writer 2 includes: four coils 21, 22, 23 and 24 corresponding to the individual sheet coils included in the IC card 1, that is, the sheet coil 11 for power and clock, the sheet coil 12 for write, the sheet coil 13 for read and the sheet coil 14 for write/read switching; a control circuit 25 for controlling a direction of data transmission/reception; a card returning member 26 for returning a loaded usable IC card 1 to the original position; a card taking-in member 27 for taking a loaded unusable IC card in its interior; and a CPU 28 for controlling these members. In this case, more specifically, the card returning member 26 and the card taking-in member 27 are both composed of an electromagnetic driving unit.

The sheet coil 11 for power and clock constitutes one of transformer coils, and receives a clock pulse from the reader/writer 2 by a mutual induction action with the sheet coil 21 constituting the other of the transformer coils. The received clock pulse is sent to the power circuit 17, and then, is converted into a direct current and a constant voltage, and thereafter, is supplied to the memory 15, the control circuit 16 or the like. Also, a driving pulse made from the clock pulse is supplied to the memory 15, the control circuit 16 or the like.

The sheet coil 12 for write receives a serial data from the reader/writer 2 by a mutual induction action with the corresponding sheet coil 22, and then, writes the data into the memory 15 via the control circuit 16. The sheet coil 13 for read converts a data read from the memory 15 via the control circuit 16 into a magnetic signal, and then, sends a serial data to the reader/writer 2 by a mutual induction action with the corresponding sheet coil 23. The sheet coil 14 for write/read switching receives an operation signal for write/read from the reader/writer 2 by a mutual induction action with the corresponding sheet coil 24. In this case, the memory 15 is a non-volatile type memory.

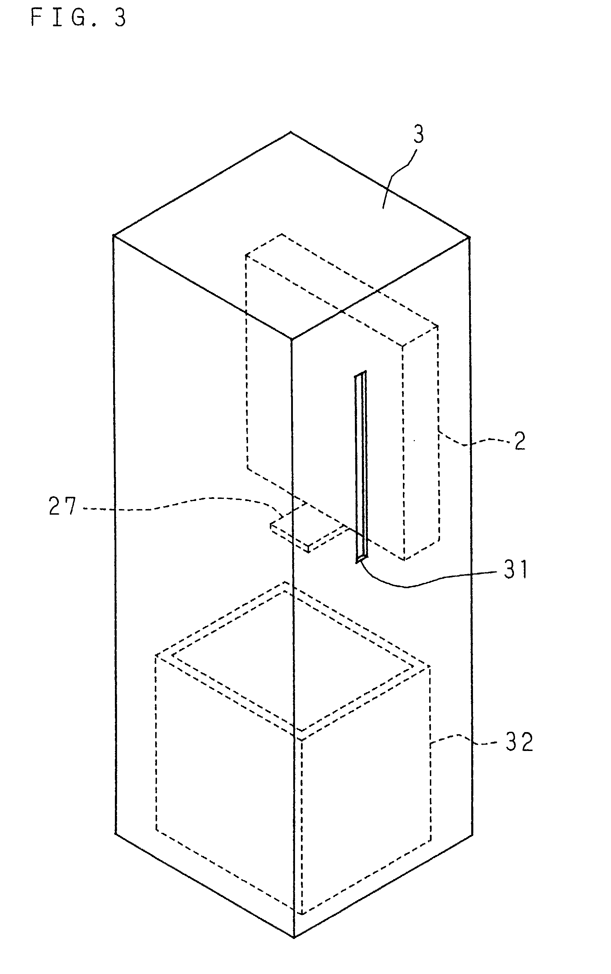

FIG. 3 is a view schematically showing a pachinko (pinball game) ball lending machine employing a card system using the aforesaid IC card 1 and the reader/writer 2. A ball lending machine 3 has a built-in reader/writer 2 having the aforesaid construction. Further, the ball lending machine 3 is provided with a card insertion opening 31 in which an IC card 1 in which a data of the number of remaining balls has been already written is inserted by a player. The IC card 1 inserted via the card insertion opening 31 is loaded onto a position facing the reader/writer 2.

Moreover, at the bottom portion of the ball lending machine 3 there is provided a card receiving bowl 32 for receiving the used IC card 1 which is already unusable. There is no component of shielding a space between a card loading position and the card receiving bowl 32. Therefore, when the loaded IC card 1 loses a supporting action to itself (supporting action by the card taking-in member 27, that is, by an electromagnetic solenoid which will be described later), the loaded IC card 1 drops down by its own weight, and then, is received in the card receiving bowl 32.

In this case, a mechanism for supplying pachinko balls to the player has no relation directly to the present invention; therefore, its illustration is omitted.

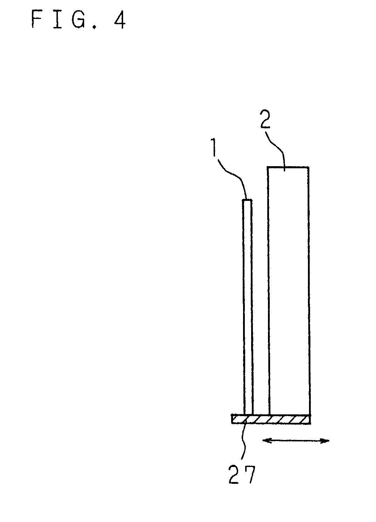

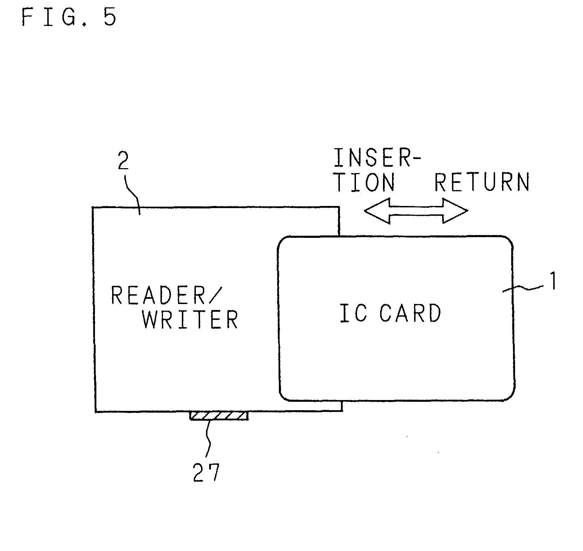

FIG. 4 and FIG, 5 schematically show a positional relationship between the IC card 1 and the reader/writer 2 in a state that the IC card 1 is loaded via the card insertion opening 31, and FIG. 4 is a front view showing the above state; on the other hand, FIG. 5 is a side view showing the same state. The IC card 1 is inserted from the card insertion opening 31 to a back side of the reader/writer 2 of FIG. 4 and to a traverse (right and left) direction as shown in FIG. 5, and then, is loaded to a position such that the sheet coils 11, 12, 13 and 14 of the IC card 1 face the corresponding sheet coils 21, 22, 23 and 24 of the reader/writer 2.

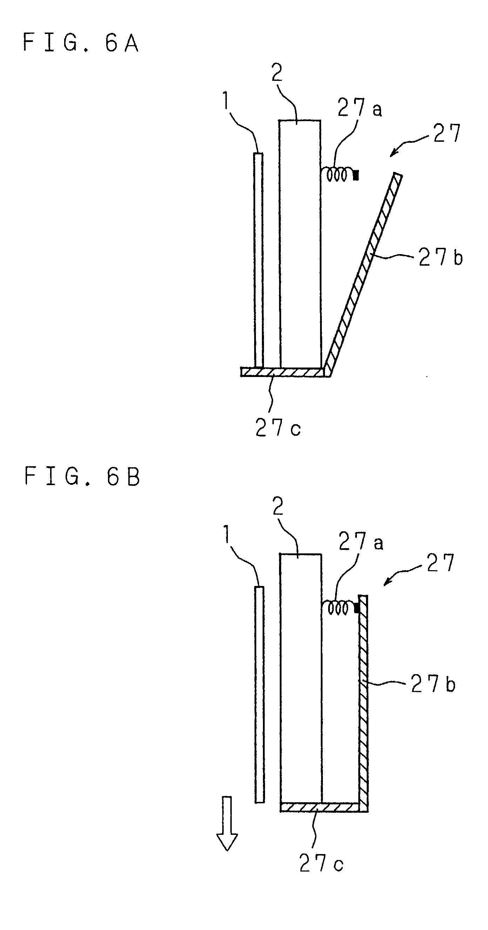

FIGS. 6A and 6B are views showing an electromagnetic solenoid which is the card taking-in member 27 of the constituent features of the present invention. The card taking-in member (electromagnetic solenoid) 27 includes: a coil 27a; a rod-shaped portion 27b which contacts with and separates from the coil 27a in accordance with a presence or absence of excitation to the coil 27a; and a supporting plate 27c which is attached to one end of the rod-shaped portion 27b, and is reciprocated in a direction perpendicular to an insertion direction of the IC card 1 and to a vertical direction in accordance with contacting and separating operations of the rod-shaped portion 27b.

In the case where the coil 27a is not excited, as shown in FIG. 6A, the rod-shaped portion 27b is separated from the coil 27a, and the supporting plate 27c is situated in a state of being projected to the card loading position. As a result, the IC card 1 is supported by means of the supporting plate 27c.

On the other hand, in the case where the coil 27a is excited, as shown in FIG. 6B, one end of the rod-shaped portion 27b is attracted to the coil 27a by a magnetic force of the coil 27a; as a result, the supporting plate 27c is retracted from the above state of being projected. Whereby the IC card 1 is not supported by the supporting plate 27c, and then, drops down by its own weight, and thus, is received in the card receiving bowl 32.

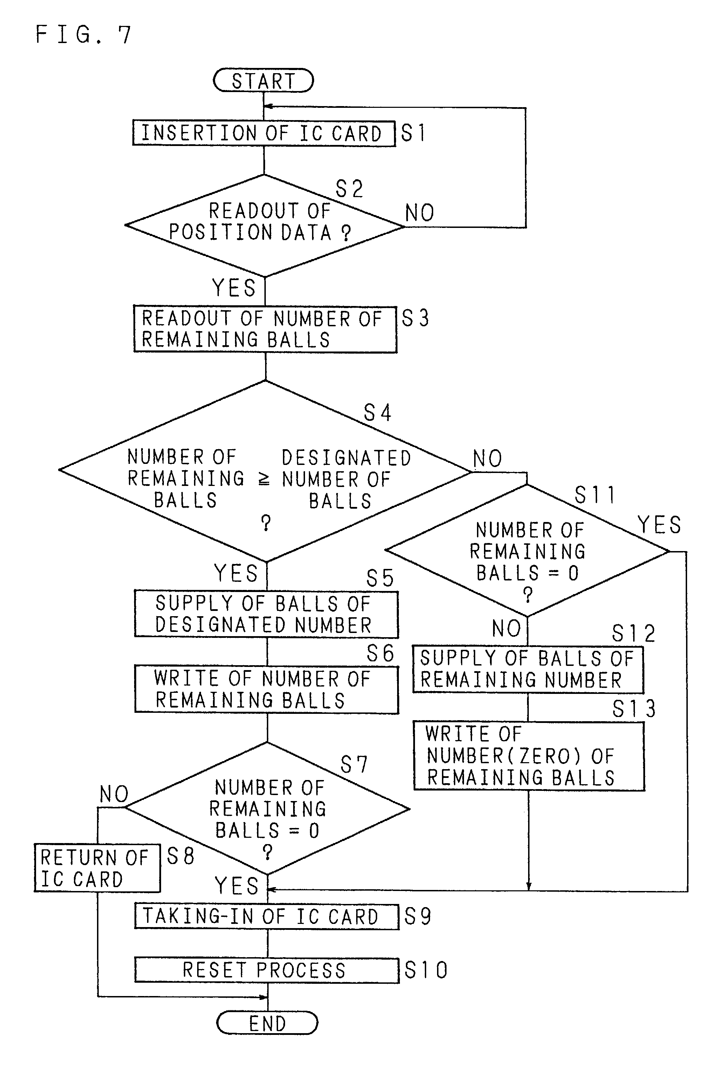

Next, the following is a description on a ball lending operation by the card system as described above. FIG. 7 is a flowchart showing a procedure for the ball lending operation.

First, a player inserts the IC card 1 into the card insertion opening 31 of the ball lending machine 3 (step S1). When the IC card 1 is loaded, the reader/writer 2 judges whether or not the IC card is loaded to a normal position, on the basis of the result whether or not a predetermined position data written in the IC card 1 is read out (step S2). In the case where the position data is not read out, that is, in the case where the IC card 1 is not loaded to the normal position (step S2:NO), an inserting operation is retried (S1).

In the case where the position data is read out, that is, in the case where the IC card 1 is loaded to the normal position (S2: YES), the reader/writer 2 reads out the number of remaining balls written in the IC card 1 (step S3). Then, the reader/writer 2 compares the number of remaining balls read out with a designated number of balls inputted by the player (step S4).

In the case where the number of remaining balls is equal or more than the designated number of balls (S4: YES), balls whose number is the same as the designated number of balls are supplied to the player (step S5). Then, the reader/writer 2 writes a number subtracting the designated number of balls from the number of remaining balls read out into the IC card 1 as a new number of remaining balls (step S6).

Further, the reader/writer 2 judges whether or not the number of remaining balls after the above subtraction becomes zero (step S7). In the case where the number of remaining balls does not still become zero (S7:NO), the IC card 1 is returned to the card insertion opening 31 by the operation of the card returning member 26 (step S8), and then, the process ends.

In the case where the number of remaining balls becomes zero (S7:YES), the coil 27a of the card taking-in member (electromagnetic solenoid) 27 is excited so as to retract the supporting plate 27c, and then, the IC card 1 drops down by its own weight, and thus, is received in the card receiving bowl 32 (step S9). The unusable IC card 1 is taken in, and thereafter, an excitation to the coil 27a is stopped so as to return the supporting plate 27c to the original position (step S10), and then, the process ends.

In the case where the number of remaining balls is less than the designated number of balls (S4:NO), the reader/writer 2 judges whether or not the number of remaining balls written in the IC card 1 is zero (step S11). Moreover, in the case where the number of remaining balls is zero (S11:YES), the coil 27a is excited so as to retract the supporting plate 27c, and then, the IC card 1 drops down by its own weight, and thus, is taken in the card receiving bowl 32 (S9). The unusable IC card 1 is taken in, and thereafter, the excitation to the coil 27a is stopped so as to return the supporting plate 27c to the original position (S10), and thus, the process ends.

On the other hand, in the case where the number of remaining balls is not zero (S11:NO), balls whose number is the same as the number of remaining balls are supplied to the player (step S12). Then, the reader/writer 2 writes a data of zero into the IC card 1 as a new number of remaining balls (step S13), and thereafter, the coil 27a is excited so as to retract the supporting plate 27c, and thus, the IC card 1 drops down by its own weight, and is taken in the card receiving bowl 32 (S9). The unusable IC card 1 is taken in, and thereafter, the excitation to the coil 27a is stopped so as to return the supporting plate 27c to the original position (S10), and thus, the process ends.

By the processing operation as described above, the reader/writer makes a decision that the IC card 1 is usable only when the IC card 1 has a data of number of remaining balls which does not still become zero, and then, only usable IC card 1 is returned to the player. In the case where the number of remaining balls of the IC card 1 becomes zero by ball lending, or in the case where the IC card 1 has a data of the umber of remaining balls already becoming zero from the first, the unusable IC card 1 as described above is forcedly taken in the card receiving bowl 32, and is not again returned to the player. Therefore, it is possible to prevent an unfair practice such that the player acquires the aforesaid unusable IC card 1, and unfairly alters the data of the unusable IC card. Further, it is possible to take in the unusable IC card 1 by its own weight. Therefore, no specific power for carrying the unusable IC card is required, and thereby, it is possible to extremely readily take in the unusable IC card 1 at a low cost.

In the above embodiment, in the case where the IC card 1 has a data of number of remaining balls which does not still become zero, the usable IC card 1 has been returned to the card insertion opening 31. The usable IC card 1 may be returned to the player via another carrying path different from the card insertion opening 31.

In the above embodiment, the electromagnetic solenoid has been used as the card taking-in member 27. Any other arbitrary mechanisms may be, of course, used as long as they have a function of taking in the IC card 1 by its own weight. For example, the following card taking-in mechanisms are applicable.

A magnetic material such as a resin having a magnetic characteristic repelling a magnet is previously embedded in the IC card 1. In the normal case, the loaded IC card 1 is supported by a repellent force against the magnet, and in the case where a decision is made such that the IC card 1 is unusable, application of magnetic field by the magnet to the IC card 1 is stopped, and thereby, it is possible to readily take in the unusable IC card 1 by its own weight.

Moreover, a vibrating member which vibrates by an electricity is previously attached to the reader/writer 2. In the case where a decision is made such that the IC card 1 is unusable, the vibrating member is vibrated, and then, the unusable IC card 1 can be readily taken in by an interaction of the principle of ciliary movement and its own weight. Further, the vibrating member is not provided, but the whole of reader/writer 2 may be vibrated so as to take in the unusable IC card 1.

The above embodiment has described the case where the present invention is applied to pachinko (pinball game) ball lending. Of course, the present invention is applicable to various situations of making a decision whether the IC card is usable or unusable, and taking the unusable IC card in the interior. For example, the present invention is applicable to the following case. That is, in the case of an IC card which is determined whether usable or unusable on the basis of the result whether or not a predetermined collating data is written therein, in the case where the collating data is not read out, the unusable IC card can be taken in by its own weight.

As is evident from the above description, in the present invention, the unusable IC card is taken in by its own weight; therefore, it is possible to extremely readily take in the unusable IC card at a low cost. As a result, the present invention can greatly contribute to the following various effects; a prevention of IC card forgery by altering the IC card data, a reuse of the IC card and a solution of a garbage problem by unusable IC cards.

## Claims

1. A reader/writer (2), which makes a decision whether an IC card (1) is usable or unusable on the basis of a level of data written in the IC card (1), and performs data read/write operations on the IC card (1) in a non-contact state,
characterized by comprising:
a readout section (23) for reading out the data from the IC card (1);
a judging section (28) for judging whether or not a level of the readout data is within a predetermined range; and
a card carrying mechanism (27) for carrying the IC card (1) by its own weight in the case where the level of the readout data is within the predetermined range.

2. The reader/writer according to claim 1, wherein the data written in the IC card (1) is a data showing a numerical value, and the judging section (28) judges whether or not a numerical value of the readout data is equal or less than a predetermined value, and further, in the case where the numerical value is equal or less than the predetermined value, the card carrying mechanism (27) carries the IC card (1) by its own weight.

3. A reader/writer (2), which makes a decision whether an IC card (1) is usable or unusable on the basis of the result whether or not a predetermined collating data is written in the IC card (1), and performs data read/write operations on the IC card (1) in a non-contact state,
characterized by comprising:
a readout section (23) for reading out a data written in the IC card (1);
a judging section (28) for judging whether or not the collating data is read out by the readout section (23); and
a card carrying mechanism (27) for carrying the IC card (1) by its own weight in the case where the collating data is not read out

4. The reader/writer (2) according to any one of claims 1 to 3, wherein the readout section (23) has a coil (23) which is magnetically coupled with a sheet coil (13) of the IC card (1), and reads out a data from the IC card (1) by magnetic coupling of the sheet coil (13) of the IC card (1) and the coil (23).

5. The reader/writer (2) according to any one of claims 1 to 4, wherein the card carrying mechanism (27) includes an electromagnetic driving unit (27a, 27b, 27c) for controlling support/non-support of the IC card (1).
